# EUROPEAN PATENT SPECIFICATION

(11) **EP 0 325 214 B1**
(45) Date of publication and mention of the grant of the patent: **10.11.1993**
(21) Application number: 89100738.7
(22) Date of filing: 17.01.1989
(51) Int. Cl.: B01J 23/94, B01J 23/84, C01B 17/79

(54) **Process for preparing a vanadium-based, high density, medium-porosity catalyst supported on a siliceous matrix**
Verfahren zur Herstellung eines Katalysators mit hoher Dichte und mittlerer Porösität, der Vanadium enthält und auf einer kieselartigen Matrix aufgetragen ist
Procédé de préparation d'un catalyseur à base de vanadium, ayant une grande densité, une porosité moyenne et supporté par une matrice silicieuse

(30) Priority: 18.01.1988 IT 1909788
(43) Date of publication of application: 26.07.1989
(73) Proprietor: AUSIMONT S.p.A., I-20121 Milano (IT)
(72) Inventor: Cavalli, Luigi, Dr., I-28100 Novara (IT); Nardini, Renzo, I-13100 Vercelli (IT)
(74) Representative: Weinhold, Peter, Dr.

(56) References cited:
- EP-A- 0 151 823
- US-A- 4 155 875
- US-A- 4 485 190
- JOURNAL OF CATALYSIS, vol. 43, 1976, pages 243-251, Academic Press, Inc., Duluth, MN, US; S.A. HASSAN et al.: "Catalytic and surface characteristics of newly imported, exhausted, and regenerated V2O5 catalysts used in H2SO4 manufacturing"

## Description

Vanadium-based catalysts, supported on a siliceous substrate are usually utilized to oxidize sulphur dioxide to sulphur trioxide; see, for example, GB-A-808,639; 898,985; 972,402 and 1,520,336, US-A-3,448,061 and 4,485,190 and EP-A-47,540 and 151,823, the contents of which are an integral part of the present description. As siliceous matrix fossil meal (diatomaceous earth) and finely subdivided silica gel are generally used, but it is possible to obtain good results also by using alpha-quartz (cristobalite), silicalites, vanadium silicalites or titanium silicalites. Regarding the meaning of these terms reference is made to GB-A-2,024,790. Said catalysts can approximately be represented by the following formula (I):

VₓK_{y}Na_{z}O_{w}Sₜ (I)

wherein x, y, w, z and t are broadly varying indices (depending on the working conditions and on the degree of ageing) and where z can also be zero. Iron (Fe) and other elements (Cs, Al, Mn, Mg etc.) are also often present. Other elements (As, Cl, F, Se etc.) are known to be catalyst poisons, even if present in very small amounts. These catalysts, utilizable in both fixed beds and fluid beds, contain vanadyl-alkali metal sulphates and pyrosulphates, the concentrations of which vary as a function of time. The yields obtainable with these catalysts are high, especially if use is made of a series of several catalytic layers (at least 3 or 4), of the axial or radial type. Generally, the catalyst is prepared by impregnating a fossil meal or a different siliceous support (average diameter = about 1 to 40 µm), with an aqueous solution of NaOH and of potassium metavanadate (KVO₃) and/or ammonium metavanadate (NH₄VO₃), whereafter the meal is thickened, for example by means of carboxymethylcellulose or a polyacrylamide. Thickening is followed by an extrusion, whereby differently shaped particles (solid, hollow or polylobed cylinders, optionally having helical grooves, etc.) are formed. Prior to use, the catalyst is activated in a SO₂ stream and a final activation is carried out by the same process fluid, containing SO₂, SO₃, O₂ and N₂, at the reaction temperature (350-650°C). During the oxidation of SO₂ to SO₃ the activated catalyst material is present in the form of a liquid film on the pore surfaces of the support. The average life time of these catalysts ranges from 5 to 10 years with a progressive decrease of the vanadium content (for example from about 7% to about 5% by weight). Therefore, the possibility of regenerating and re-using the exhausted catalyst would represent an advantage of great industrial importance. However, it was not possible so far to translate into reality any of the various proposed alternatives.

According to a first alternative [see Journal of Catalysis 43, 243-251 (1976)], the exhausted catalyst should be treated with a strong acid (HCl), capable of solubilizing the vanadium, and the same vanadium should then be recovered by extraction. This method, however, could not be realized, due to the presence of an insoluble siliceous gangue which effectively retains a not negligible amount of vanadium. The difficulties encountered in the separation of the gangue could not be overcome so far, at least not on an industrial seale.

A second alternative (see again said article in Journal of Catalysis) comprises heating the exhausted supported catalyst to very high temperatures (500°C), in order to remove arsenic and other poisons, and subsequent grinding of the calcination residue. Thereafter the ground residue has to be kneaded with sulphur and an ammonium sulphate solution, whereafter an activation with air at 750 - 800°C is carried out. However, this method is also not free of drawbacks. Compression strength, ageing resistance and abrasion resistance of the resulting catalyst are not fully satisfactory; furthermore, the SO₂ conversion often decreases to unacceptable values.

A third alternative, at last, contemplates a possible recovery from an exhausted catalyst having a silica (SiO₂) content higher than 80% by weight; in this case, however, as a consequence of a very long exploitation of the catalyst, a considerable portion of the catalytic activity is irretrievably lost.

The Applicant has now found that it is possible to prepare an excellent catalyst (free of said drawbacks), in an extremely rapid and simple fashion, by starting from an already expoited and now exhausted catalyst.

In its broadest aspect, the invention relates to a process for preparing a high-density, medium porosity catalyst for the oxidation of SO₂ to SO₃, supported on a siliceous matrix and based on SO₃, vanadium, oxygen and alkali metals, in which the V₂O₅ content ranges from 6 to 9% by weight, the K₂O content ranges from 8.5 to 12% by weight and the particle density (see ASTM-D-3766-83a standards) ranges from 0.90 to 1.40 g/cm³, and in which, furthermore:
- the volume of the pores ranges from 0.30 to 0.70 cm³/g, the surface area ranges from 0.30 to 3 m²/g and the average radius of the pores is from 650 to 2200 nm;
- the SiO₂ content is equal to or lower than 75%, and preferably lower than 60%, by weight and the Fe₂O₃ content is equal to or higher than 0.90% by weight.

The presence of a relatively high iron content proves that the catalyst originates from an exhausted catalyst (utilized as a raw material), in which iron has accumulated (predominantly due to the corrosion of the apparatus). To calculate the average radius of the pores, the formula $\text{R = 2V/S x 1000 (nanometers)}$ may be used, wherein V is the volume of the pores (cm³/g) and S is the surface area of the pores (m²/g).

This catalyst can be prepared, according to the process of the present invention, in a very rapid and simple manner, by (i) grinding a preformed and already used (exhausted) catalyst of the same type, having a silica (SiO₂) content equal to or lower than 75%, and preferably lower than 60%, by weight (coming from an already existing plant for the oxidation of sulphur dioxide to sulphur trioxide), until the average diameter of the particles is in the range of from 1 to 50 (preferably from 5 to 40) µm; and (ii) impregnating the thus obtained particles by means of an aqueous solution specified below which contains a compensating amount of those catalytic elements the lack of which had rendered the previously employed catalyst no longer utilizable (exhausted). Before adding the solution it is possible to mix the ground material with small amounts of fresh fossil meal, up to a maximum of 60%, and preferably of 50%, by weight, based on the total mixture of added catalyst. As an alternative to the fossil meal it is possible to use silicalites, titanium silicalites, vanadium silicalites or alpha-quartz, provided, of course, that the final SiO₂ content in the catalyst does not exceed 75%, and preferably 60%, by weight. Excellent results have been obtained by adding said solution according to the "dry" impregnation technology, which is described for example in Ind. Eng. Chem. Prod. Res. Dev.; vol. 20 (1981), page 441. Reference should also be made to EP-A-47,540 and 151,823. As an alternative, the solution can be added prior to and/or during grinding, according to a technology which is known as "co-mulling" (US-A-4,444,742 and 4,444,908).

The catalysts prepared according to the process of the present invention lead to an unexpected result; in fact, after a normal activation (first with SO₂, then with the process gases), they substantially exhibit - weight and temperature being equal - the catalytic activity of a fresh catalyst. That permits to charge the reactors with much higher (even + 20 % by weight) amounts of catalyst in comparison to the operation with a fresh catalyst, whereby higher conversions without increasing at all the volume and/or varying the geometry of the reactors, may be obtained.

The present invention may be practised by following various procedures. The above aqueous solution for impregnating the ground particles contains one or more water-soluble vanadium compounds, preferably selected from potassium metavanadate, sodium metavanadate, ammonium metavanadate or vanadium anhydride (V₂O₅) and furthermore, water-soluble compounds of potassium and of sodium, preferably selected from potassium and sodium hydroxide, oxalate, oxide, carbonate, bicarbonate, sulphate, bisulphate or metavanadate.
As alkali metal also caesium (besides K and Na) can be present.
Besides the basic elements (V, K, Na, O, Fe) also a synergistic amount of titanium can be present.
Thickening (by means of carboxymethyl-cellulose or polyacrylamide) can be carried out in one or more steps and can be preceded by the addition of a pore-forming agent, selected, for example, from starch and the ammonium phosphates (in particular diammonium phosphate), and optionally also of H₂O.
The catalyst can be shaped in the form of solid, hollow or polylobed cylinders, optionally with helical grooves, the shaping being followed by drying and by an activating calcination, in the presence of SO₂, at a temperature generally ranging from 270 to 600°C.

The following examples are given to illustrate the present invention without limiting, however, the scope thereof.

### Example 1 (Fresh catalyst: basic example)

This example describes the usual preparation of a catalyst by using, as raw material, fresh fossil meal. To 1 kg of fossil meal, having a SiO₂ content equal to 87.13% by weight and marketed by DIATOM Co. under the trade-name Diatom® 135C, there were added, under stirring, in a sigma-blade kneading machine, 0.433 liters of a potassium vanadate solution (titre = 280 g/liter of V₂O₅). After 15 minutes there were added 0.17 liters of concentrated sulphuric acid (density = 1.54 g/cm³). Stirring was continued for further 15 minutes, whereafter 126 g of carboxymethylcellulose (CMC) as powder and 930 g of an aqueous solution of CMC at 3% by weight were added to the so-obtained paste. The paste was extruded through a piston extruder, whereby (solid) cylinders having a diameter of 4 mm and a height of 5 - 6 mm were obtained. The so-obtained product was dried at 120°C for 12 hours whereafter an SO₂ flow at 270°C was passed over it. The final activation was carried out at 450°C. The resulting catalyst exhibited the following composition by weight:
- V₂O₅ =: 7.84%
- K₂O =: 10.95%
- SiO₂ =: lower than 59%
- SO₃ =: 20.85%
- Na₂O =: 1.37%
It showed the following physical properties:
- surface area =: 1.05 m²/g
- particle density =: 0.86 g/cm³
- actual density =: 2.41 g/cm³;
- pore volume =: 0.784 cm³/g.

### Example 2 (regenerated high-density catalyst)

This example describes the method of preparing a catalyst by impregnating an already exhausted catalyst with a potassium metavanadate solution, in amounts such as to bring the concentrations of vanadium and potassium to the levels of a fresh catalyst. The exhausted starting catalyst, sampled after discharge from an industrial converter, exhibited the following composition by weight:
- V₂O₅ =: 7.00%
- K₂O =: 9.50%
- SiO₂ =: lower than 60%
- SO₃ =: 21.24%
- Na₂O =: 0.93 %
and the following physical properties:
- surface area =: 1.66 m²/g
- actual density =: 2.40 g/cm³
- particle density =: 1.08 g/cm³
- volume of pores =: 0.51 cm³/g.

1 kg of said exhausted catalyst was ground until a powder (with a marked tendency to cake) was obtained, with an average diameter of the particles lower than 50 µm. To the resulting powder there were added, under stirring, in a kneading machine, 75 g of a potassium vanadate solution (titre = 305.8 g/liter of V₂O₅; density = 1.55 g/liter), diluted to 150 ml with H₂O. Stirring was continued for 15 minutes, whereafter 30 g of a thickening agent based on polyacrylamide, marketed by MONTE-FLUOS Co. under the trade-name Ecolar® 8008 (as a powder) and 480 g of an aqueous solution of said Ecolar® 8008 (concentration = 15 g/liter) were added. The resulting product was then extruded, dried and activated according to the procedure of example 1. The thus obtained catalyst exhibited the following composition by weight:
- V₂O₅ =: 7.88%
- K₂O =: 10.80%
- Na₂O =: 0.90%
- SO₃ =: 22.93%
- SiO₂ =: about 56%
- Fe₂O₃ =: 1.45%
and the following physical properties:
- surface area =: 0.76 m²/g
- actual density =: 2.41 g/cm³
- particle density =: 1.31 g/cm³
- pore volume =: 0.304 cm³/g
- average radius of the pores =: 800 nm.

For the activity tests, a cylindrical laboratory reactor (immersed in a thermostatic bath of molten salts), having an internal diameter of 42 mm and a height of 450 mm, equipped with a coaxial thermocouple, was used. The reactor was charged with 80 g of regenerated catalyst (115 ml) distributed in 10 layers of 8 g each with 11 interposed layers of an inert material (calcined Al₂O₃) having a height of about 3 cm each, in order to achieve a substantially isothermal reaction profile. Before being fed into the reactor, the catalyst was subjected to an activating grinding process, which provided particles having an average size of from 0.1 to 1 mm. The diffusion effects were practically eliminated by said grinding.

The results are indicated in Table 1.

### Example 3

Example 2 was repeated, increasing the amount of catalyst fed to the reactor to 120 g (140 ml).
The results are indicated in Table 1.

### Example 4 (comparative test)

Example 2 was repeated, employing 80 g of non-regenerated, exhausted catalyst.
The obtained (unsatisfactory) results are reported in Table 1.

### Example 5 (comparative test)

This example describes a method of preparing a catalyst obtainable by subjecting the exhausted catalyst to a heat treatment according to the article in the Journal of Catalysis (1976) cited above. Said heat treatment had the purpose of concentrating vanadium and potassium, bringing the concentrations of these elements to the corresponding values of the fresh catalyst.

A sample of exhausted catalyst, sampled after discharge from an industrial converter, exhibited the following weight composition:
- V₂O₅ =: 7.11%
- K₂O =: 10.20%
- SiO₂ =: about 65%
- SO₃ =: 17.05%
- Na₂O =: 1.16%
and the following physical properties:
- surface area =: 3.03 m²/g
- actual density =: 2.41 g/cm³
- particle density =: 0.62 g/cm³
- pore volume =: 1.20 cm³/g.

The sample was heated in a muffle furnace at 530°C and maintained at this temperature for 24 hours, whereby a concentration of the active elements was achieved. The loss, at 100°C, was 0.84% by weight (and 7.58% by weight at 530°C). After calcination, the sample was analyzed and the following values were found:
- V₂O₅ =: 7.96% by weight
- SO₃ =: 8.94% by weight.

To a 1 kg sample of exhausted catalyst treated as described above at 530°C, 1 g of Ecoclar® 8008 and 600 g of a solution (15 g/liter) of Ecoclar® 8008 were added; the components were mixed under stirring, extruded and then dried and activated, following the procedure of example 1. The catalytic test, conducted according to the procedure of example 2, gave the results recorded in Table 1 along with the characteristics of the final catalyst. As is apparent from Table 1, the method dating back to 1976 leads to a catalyst having too small pores and exhibiting less satisfactory performance than the catalyst prepared according to the invention.

### Example 6

To a mixture of 0.5 kg of fossil meal (marketed by CLARCEL Co. under the trade-name CLARCEL® S1) and 0.5 kg of an exhausted catalyst containing:
- V₂O₅ =: 5.5% by weight
- K₂O =: 7.2% by weight
there were added 67.75 g of NH₄VO₃ and 253.9 g of KHSO₄. After dry mixing of all the components, 50 g of (NH₄)₂HPO₄ (as pore-forming agent) and 50 ml of deionized H₂O were added. After a 10-minute mixing step, 5 g of a polyacrylamide (Ecolar® 8008 as a powder) and 266 g of a different type of polyacrylamide (Ecoclar® 8042) were added as extrusion coadjuvants. The product was then extruded in the form of hollow cylinders having a diameter of 4 mm, which were dried at 120°C for 12 hours. Then an activation step at 600°C was carried out, gradually raising the temperature. The resulting product exhibited the following composition by weight:
- V₂O₅ =: 6.80%
- K₂O =: 8.95%
- Na₂O =: 1.19%
- SO₃ =: 15.76%
- SiO₂ =: lower than 67%
- Fe₂O₃ =: 0.97%
and the following physical properties:
- surface area =: 1.70 m²/g
- actual density =: 2.40 g/cm³
- particle density =: 0.93 g/cm³
- pore volume =: 0.66 cm³/g
- average radius of the pores =: 776 nm.
The activity test, conducted according to the procedure of example 2, gave the results indicated in Table 1.

### Example 7

Example 3 was repeated and starch was added as pore-forming agent during the preparation of the catalyst. There was obtained a catalyst having the following physical properties:
- surface area =: 0.42 m²/g
- particle density =: 1.15 g/cm³
- average radius of the pores =: 2190 nm
- volume of the pores =: 0.46 cm³/g.
The oxidation yields of the catalyst were similar to the yields obtained according to the test of example 3.

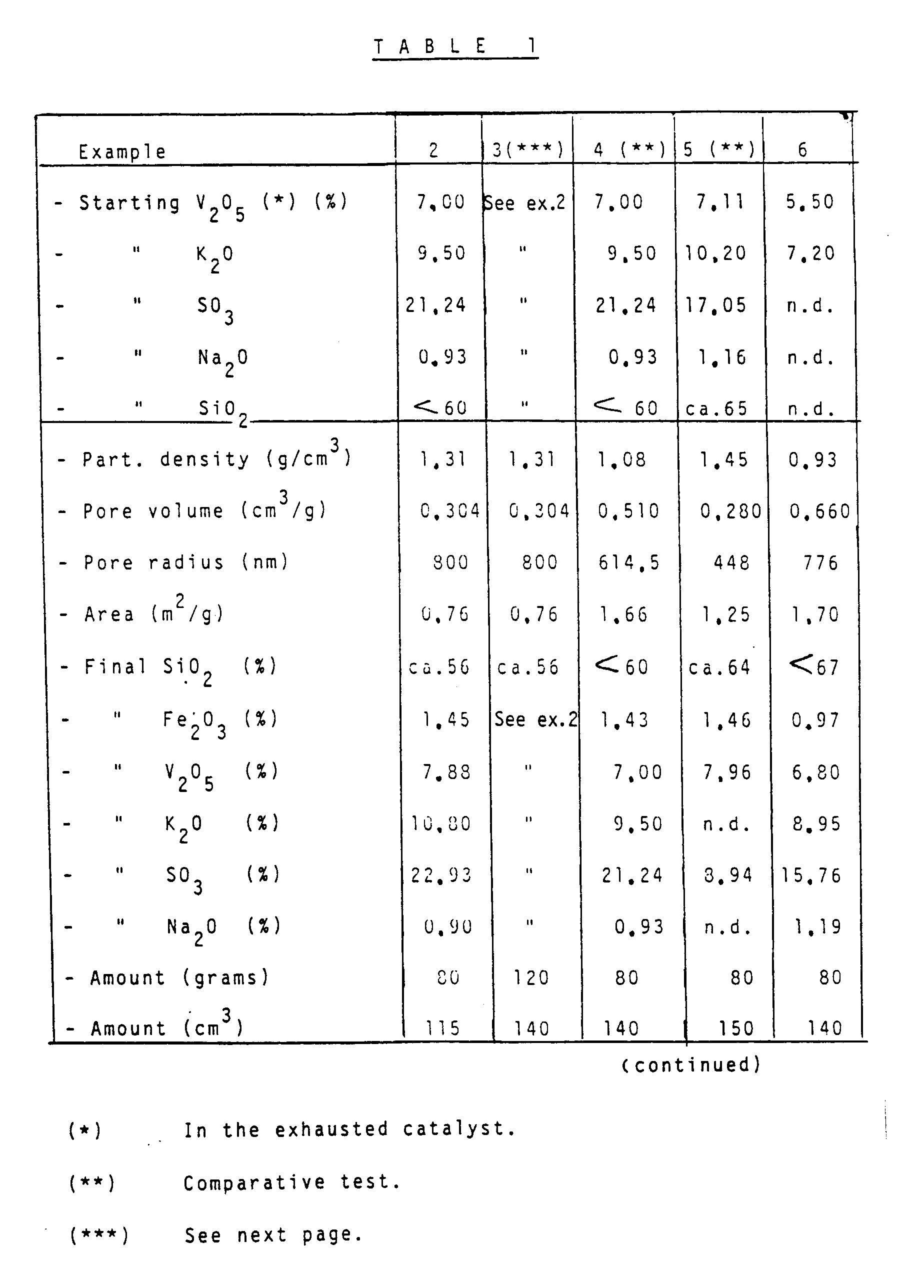

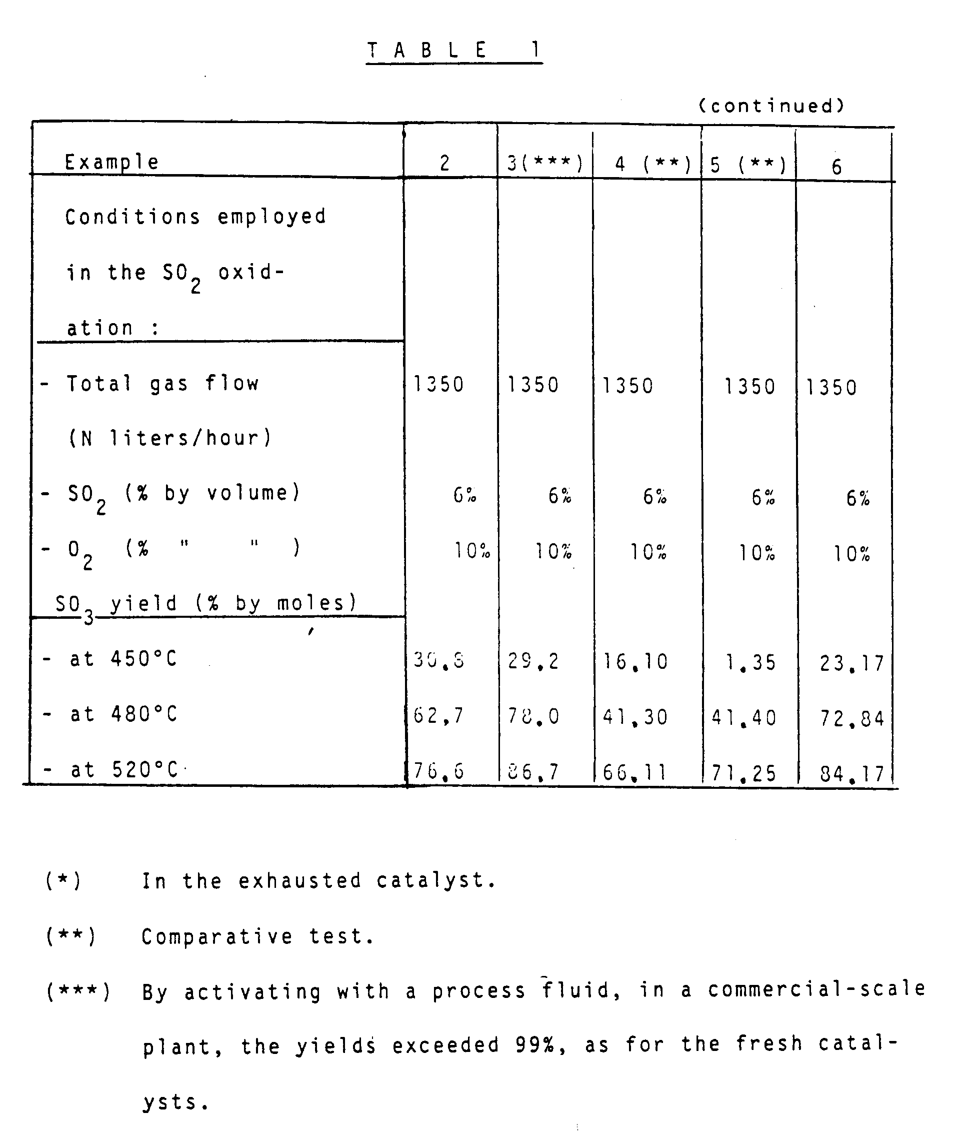

## Claims

1. Process for preparing a high-density, medium-porosity catalyst for the oxidation of SO₂ to SO₃, supported on a siliceous matrix and based on SO₃. vanadium, oxygen and alkali metals and having a V₂O₅ content of from 6 to 9% by weight, a K₂O content of from 8.5 to 12% by weight and a particle density of from 0.90 to 1.40 g/cm³ and in which furthermore:
- the volume of the pores ranges from 0.30 to 0.70 cm³/g, the surface area ranges from 0.30 to 3 m²/g, and the average radius of the pores is from 650 to 2200 nm;
- the SiO₂ content is equal to or lower than 75% by weight and the Fe₂O₃ content is equal to or higher than 0.90% by weight;
characterized in that it comprises:
( i) grinding a preformed and already used (exhausted) catalyst as defined above but having lower contents of the catalytic elements, showing a silica content lower than 75% by weight and a Fe₂O₃ content higher than 0.90% by weight, until the average diameter of the particles ranges from 1 to 50 (preferably from 5 to 40) µm; and
(ii) impregnating the thus obtained particles by means of an aqueous solution containing one or more water-soluble compounds of vanadium, preferably selected from KVO₃, NaVO₃, NH₄VO₃ and V₂O₅, and furthermore:
- one or more water-soluble potassium compounds, preferably selected from potassium hydroxide, oxide, oxalate, carbonate, bicarbonate, sulphate. bisulphate and metavanadate, and, optionally
- one or more water-soluble sodium compounds, preferably selected from sodium hydroxide, oxide, oxalate, carbonate, bicarbonate, sulphate, bisulphate and metavanadate.

2. The process of claim 1, wherein the SiO₂ content of the exhausted catalyst and in the catalyst to be obtained is equal to or lower than 60% by weight.

3. The process of claim 1 or 2, wherein an amount of fresh fossil meal of up to 60%, and preferably up to 50%, by weight (based on the whole mixture of added catalyst components) is added to the ground matter prior to impregnation, said fossil meal optionally being replaced (totally or partially ) by one or more of silicalites, titanium silicalites, vanadium silicalites and alpha quartz.

4. The process of one or more of the preceding claims, wherein impregnation is carried out according to the dry-impregnation technology.

5. The process of one or more of the preceding claims, wherein impregnation is followed by a thickening process, in one or more steps, preferably by addition of a carboxymethyl cellulose and/or a polyacrylamide (optionally hydrolized).

6. The process of claim 5, wherein the thickening process is preceded by the addition of a pore-forming agent, preferably selected from starch and ammonium phosphates (in particular diammonium phosphate), optionally along with water; and/or the thickening process is followed by a shaping process, preferably by means of extrusion, for forming solid, hollow or poly-lobed cylindrical particles, optionally having helical grooves, said shaping process being optionally followed by drying and calcination, in the presence of SO₂, at a temperature of from 270 to 600°C.

7. The process of one or more of the preceding claims, wherein said impregnation is carried out with a solution containing one or more water-soluble caesium compounds and/or one or more pore-forming agents and/or one or more water-soluble titanium compounds.

8. The process of one or more of the preceding claims, characterized in that the water-soluble vanadium compounds are selected from potassium metavanadate and ammonium metavanadate.

9. The process of one or more of the preceding claims, wherein the water-soluble potassium compounds are selected from potassium metavanadate and potassium bisulphate.

## Patentansprüche

1. Verfahren zur Herstellung eines Katalysators mit hoher Dichte und mittlerer Porosität zur Oxidation von SO₂ zu SO₃ mit einem Träger aus einer kieselartigen Matrix, der auf SO₃, Vanadium. Sauerstoff und Alkalimetallen basiert, wobei der V₂O₅-Gehalt von 6-9 Gew.-%, der K₂O-Gehalt von 8,5 bis 12 Gew.-% und die Teilchendichte von 0,90 bis 1,40 g/cm³- beträgt, und wobei weiterhin
- das Volumen der Poren von 0,30 bis 0,70 cm³/g, die Oberfläche von 0,30 bis 3 m²/g und der durchschnittliche Radius der Poren 650 bis 2200 nm beträgt;
- der SiO₂-Gehalt gleich oder niedriger als 75 Gew.-% und der Fe₂O₃-Gehalt gleich oder höher als 0,90 Gew.-% ist,
dadurch gekennzeichnet, daß dieses umfaßt:
(i) Mahlen eines vorgeformten und bereits verwendeten (verbrauchten) Katalysators, der wie oben definiert ist, jedoch mit einem niedrigeren Gehalt an Katalysator-Elementen, mit einem Siliziumoxid-Gehalt von weniger als 75 Gew.-% und einem Fe₂O₃-Gehalt von mehr als 0,90 Gew.-%, bis der durchschnittliche Teilchendurchmesser der Teilchen zwischen 1 bis 50 (vorzugsweise 5 bis 40) µm beträgt, und
(ii) Imprägnieren der so erhaltenen Teilchen mit einer wässrigen Lösung, die eine oder mehrere wasserlösliche Verbindungen von Vanadium, vorzugsweise ausgewählt aus KVO₃, NaVO₃, NH₄VO₃ und V₂O₅ enthält und weiterhin:
- eine oder mehrere wasserlösliche Kaliumverbindungen, vorzugsweise ausgewählt aus Kaliumhydroxid, Oxid, Oxalat, Carbonat, Bicarbonat, Sulfat, Bisulfat und Metavanadat und, gebenenfalls
- eine oder mehrere wasserlösliche Natriumverbindungen, vorzugsweise ausgewählt aus Natriumhydroxid, Oxid, Oxalat, Carbonat, Bicarbonat, Sulfat, Bisulfat und Metavanadat.

2. Verfahren nach Anspruch 1, worin der SiO₂-Gehalt des verbrauchten Katalysators und der des herzustellenden Katalysators gleich oder niedriger als 60 Gew.-% ist.

3. Verfahren nach Anspruch 1 oder 2, worin eine Menge an frischem Erdmehl von bis zu 60, vorzugsweise bis zu 50 Gew.-% (bezogen auf die der Gesamtmischung zugegebenen Katalysatorkomponenten) zu der gemahlenen Masse vor dem Imprägnieren zugegeben wird, wobei das genannte Erdmehl gegebenenfalls (vollständig oder teilweise) durch ein oder mehrere Silikalite, Titansilikalite, Vanadiumsilikalite und α-Quartz ersetzt werden kann.

4. Verfahren nach einem oder mehreren der vorhergehenden Ansprüche, worin die Imprägnierung entsprechend der Trocken-Imprägnierungs-Technologie vorgenommen wird.

5. Verfahren nach einem oder mehreren der vorhergehenden Ansprüche, worin der Imprägnierung ein Verdickungsverfahren folgt, und zwar in einem oder mehreren Schritten, vorzugsweise durch Zugabe einer Carboxymethylzellulose und/oder eines Polyacrylamids (gegebenenfalls hydrolysiert).

6. Verfahren nach Anspruch 5, worin dem Verdickungsverfahren die Zugabe eines Poren-bildenden Mittels vorausgeht, das vorzugsweise ausgewählt wird aus Stärke, Ammoniumphosphaten (insbesondere Diammoniumphosphat), gegebenenfalls zusammen mit Wasser; und/oder dem Verdickungsverfahren ein Formgebungsverfahren folgt, vorzugseise mittels Extrudieren, zur Bildung von massiven, hohlen oder mehrfach gelappten zylindrischen Teilchen, gegebenenfalls mit spiralförmigen Vertiefungen, wobei dem Formgebungsverfahren gegebenenfalls Trocknen und Kalzinieren in Anwesenheit von SO₂ bei einer Temperatur von 270 bis 600° C folgt.

7. Verfahren nach einem oder mehreren der vorhergehenden Ansprüche, worin die genannte Imprägnierung mit einer Lösung durchgeführt wird, die eine oder mehrere wasserlösliche Cäsiumverbindungen und/oder ein oder mehrere Poren-bildende Mittel und/oder eine oder mehrere wasserlösliche Titanverbindungen enthält.

8. Verfahren nach einem oder mehreren der vorhergehenden Ansprüche, dadurch gekennzeichnet, daß die wasserlöslichen Vanadiumverbindungen ausgewählt sind aus Kalium-metavanadat und Ammonium-metavanadat.

9. Verfahren nach einem oder mehreren der vorhergehenden Ansprüche, worin die wasserlöslichen Kaliumverbindungen ausgewählt werden aus Kalium-metavanadat und Kaliumbisulfat.

## Revendications

1. Un procédé de préparation d'un catalyseur de porosité moyenne et de densité élevée pour l'oxydation de SO₂ en SO₃, fixé sur une matrice silicieuse et à base de SO₃, vanadium, oxygène et métaux alcalins et présentant une teneur en V₂O₅ comprise entre 6 et 9% en poids, une teneur en K₂O comprise entre 8,5 et 12% en poids et une densité particulaire comprise entre 0,90 et 1,40 g/cm³ et de plus dans lequel:
- le volume des pores est compris entre 0,30 et 0,70 cm³/g, la surface est comprise entre 0,30 et 3 m²/g et le rayon moyen des pores est compris entre 650 et 2200 nm;
- la teneur en SiO₂ est inférieure ou égale à 75% en poids et la teneur en Fe₂O₃ est supérieure ou égale à 0,90% en poids;
caractérisé en ce qu'il comprend:
(i) le broyage d'un catalyseur préformé et déjà utilisé (usé) tel que défini ci-dessus mais ayant des teneurs inférieures en éléments catalytique, présentant une teneur en silice inférieure à 75% en poids et une teneur en Fe₂O₃ supérieure à 0,90% en poids, jusqu'à ce que le diamètre des particules soit compris entre 1 et 50 µm, de préférence entre 5 et 40 µm; et
(ii) l'imprégnation des particules ainsi obtenues au moyen d'une solution aqueuse contenant un ou plusieurs dérivés solubles dans l'eau de vanadium, de préférence sélectionnées parmi KVO₃, NaVO₃, NH₄VO₃ et V₂O₅ et de plus:
- un ou plusieurs dérivés de potassium hydrosolubles, sélectionnés de préférence parmi l'hydroxyde, l'oxyde, l'oxalate, le carbonate, le bicarbonate, le sulfate, le bisulfate et le métavanadate de potassium, et éventuellement;
- un ou plusieurs dérivés de sodium hydrosolubles, de préférence sélectionnés parmi l'hydroxyde, l'oxyde, l'oxalate, le carbonate, le bicarbonate, le sulfate, le bisulfate et le métavanadate de sodium.

2. Un procédé selon la revendication 1, dans lequel la teneur en SiO₂ du catalyseur usé et du catalyseur devant être obtenu est inférieure ou égale à 60% en poids.

3. Un procédé selon la revendication 1 ou 2, dans lequel une quantité de Kieselguhr frais, représentant jusqu'à 60% et de préférence jusqu'à 50% en poids (par rapport au mélange total des composants de catalyseur ajouté), est ajoutée à la matière broyée avant l'étape d'imprégnation, ledit kieselguhr étant éventuellement remplacé (totalement ou en partie) par un ou plusieurs silicalites, silicalites de titane, silicalites de vanadium et quartz alpha.

4. Un procédé selon une ou plusieurs des revendications précédentes, dans lequel l'imprégnation est mise en oeuvre selon une technique d'imprégnation par voie sèche.

5. Un procédé selon une ou plusieurs des revendications précédentes, dans lequel l'imprégnation est suivie par un procédé d'épaississement en une ou plusieurs étapes, de préférence par addition de carboxyméthylcellulose et/ou d'un polyacrylamide (éventuellement hydrolysé).

6. Un procédé selon la revendication 5, dans lequel le procédé d'épaississement est mis en oeuvre par addition d'un agent formant des pores, de préférence sélectionné parmi les phosphates d'ammonium et l'amidon (en particulier le diphosphate d'ammonium), éventuellement avec de l'eau; et/ou le procédé d'épaississement est suivi par un procédé de façonnage, de préférence au moyen d'une extrusion pour former des particules cylindriques polylobés creuses ou solides comportant éventuellement des rainures hélicoïdales, ledit procédé de façonnage étant éventuellement suivi par une étape de séchage et de calcination en présence de SO₂ à une température comprise entre 270°C et 600°C.

7. Un procédé selon une ou plusieurs des revendications précédentes, dans lequel ladite imprégnation est mise en oeuvre avec une solution contenant un ou plusieurs dérivés de césium hydrosoluble et/ou un ou plusieurs agents formant des pores et/ou un ou plusieurs dérivés de titane hydrosoluble.

8. Un procédé selon une ou plusieurs des revendications précédentes, caractérisé en ce que les dérivés de vanadium hydrosolubles sont sélectionnés parmi métavanadate de potassium et métavanadate d'ammmonium.

9. Un procédé selon une ou plusieurs des revendications précédentes, dans lequel les dérivés de potassium hydrosolubles sont sélectionnés parmi métavanadate de potassium et bisulfate de potassium.
